Europäisches Patentamt

European Patent Office

Office européen des brevets

(11) Veröffentlichungsnummer: **0 102 605**
**B1**

(12) **EUROPÄISCHE PATENTSCHRIFT**

(45) Veröffentlichungstag der Patentschrift:
13.08.86

(51) Int. Cl.⁴: **F 16 B 25/00**

(21) Anmeldenummer: **83108488.4**

(22) Anmeldetag: **29.08.83**

(54) Holzschraube.

(30) Priorität: 02.09.82 DE 8224738 U
02.09.82 DE 8224737 U
08.02.83 DE 8303394 U

(43) Veröffentlichungstag der Anmeldung:
14.03.84 Patentblatt 84/11

(45) Bekanntmachung des Hinweises auf die Patenterteilung:
13.08.86 Patentblatt 86/33

(84) Benannte Vertragsstaaten:
AT BE CH DE FR GB IT LI LU NL SE

(56) Entgegenhaltungen:
CH-A-50 995
DE-A-3 003 280
DE-B-2 754 870
GB-A-2 072 781

O. Richter, R. V. Voss, "Bauelemente der
Feinmechanik", 9. Auflage, VEB Verlag Technik
Berlin (DE), Seite 85, Bilder 262.1, 262.2

(73) Patentinhaber: **Rockenfeller KG
Befestigungselemente, Ferndorfstrasse 80, D-5912
Hilchenbach 1 (DE)**

(72) Erfinder: **Rockenfeller, Gottfried, Ing. grad., An
der Wilhelmsburg 11, D-5912 Hilchenbach (DE)**
Erfinder: **Rockenfeller, Wolfgang, Dipl.- Ökonom,
Am Rauhen Berg 6, D-5912 Hilchenbach-
Helberhausen (DE)**

(74) Vertreter: **Müller, Gerd, Patentanwälte F.W.
Hemmerich Gerd Müller, Dipl.- Ing. D. Grosse
Felix Pollmeier Hammerstrasse 2, D-5900 Siegen
1 (DE)**

### Beschreibung

Die Erfindung betrifft eine Holzschraube mit einem angestauchten, einen Werkzeugeingriff aufweisenden Kopf, einem an dessen Unterseite anschließenden Vollschaft und einem sich wiederum an diesen anschließenden, in eine Spitze auslaufenden Gewindeabschnitt, bei welcher die Gänge des Gewindes jeweils zwei gegeneinander und gegen eine auf einer Normalebene zur Schaftachse liegende Mittelebene geneigte Flanken haben.

Holzschrauben dieser Gattung mit einem durch Aufwalzen hergestellten Gewinde sind bereits durch die GB-A-2 072 781 bekannt.

Gegenüber herkömmlichen Holzschrauben mit eingestrehltem oder eingefrästem Gewinde haben diese Holzschraube mit aufgewalztem Gewinde den Vorteil, daß sie eine höhere Festigkeit aufweisen, weil einerseits durch die spanlose Reduzierung des Schaftdurchmessers im Gewindebereich und andererseits durch den ebenfalls spanlosen Gewindewalzvorgang eine Materialverfestigung eintritt.

Holzschrauben mit einem durch Aufwalzen hergestellten Gewinde der durch die GB-A-2 072 781 bekanntgewordenen Art lassen sich auch so gestalten, daß sie - zumindest in natürlich gewachsenes Holz - auch ohne Vorbohren von Löchern eingedreht werden können und dabei ein Aufspleißen des Materials in ihrem Aufnahmebereich vermeiden. Die Gestaltung dieser Holzschrauben ist aber auch so, daß sich kein verringerter Auszugwiderstand ergibt, wenn die gleiche Schraube in vorgebohrte Löcher mit vermindertem Eindrehwiderstand eingebracht wird.

Ein Eintreiben dieser Holzschrauben nach Art eines Nagels, bspw. durch Einschlagen oder Einschießen, ist jedoch nicht möglich, weil durch die Gewindegänge des dem Eindringbereich des Schaftes benachbarte Material abreißt und damit der Schraube im so entstehenden Loch kein sicherer Halt mehr gewährt wird.

Bei der Holzschraube nach der GB-A-20 72 781 ist das Gewinde auf dem Gewindeabschnitt mit einem gegenüber dem Querschnitt des Vollschaftes vergrößerten Außendurchmesser ausgewalzt und unterhalb des Kopfes ist am Vollschaft ein zylinderförmiger sowie konisch angefaster Bund angestaucht, dessen Durchmesser etwa dem Außendurchmesser des Gewindes entspricht, während sich die konische Anfasung in Richtung auf die Schraubenspitze hin verjüngt.

Bekannt ist durch die DE-B-27 54 870 aber auch schon eine durch Kaltwalzen geformte, selbstfurchende Schraube, bei der der Kerndurchmesser des Gewindeabschnittes geringfügig kleiner als der Querschnitt des Vollschaftes ausgewalzt ist.

Das Buch "Bauelemente der Feinmechanik" von O. Richter und R.V. Voss, 9. Auflage, VEB-Verlag Technik Berlin, Seite 85, weist es bei gewalzten Bolzengewinden aber auch schon als bekannt nach, beide Maßnahmen an ein und derselben Schraube gleichzeitig vorzusehen.

Der Erfindung liegt die Aufgabe zugrunde, gattungsgemäße Holzschrauben so zu verbessern, daß sie nicht nur in gewachsenes Holz, sondern auch in Spanplatten sowohl mit als auch ohne Vorbohren von Löchern problemlos und mit relativ geringem Widerstand eingedreht werden können, ohne daß der Auszugwiderstand verringert wird. Vielmehr sollen sie zugleich auch so gestaltet sein, daß sie sich nach Art eines Nagels in Holz oder Kunststoff-Dübel eintreiben lassen, also eingeschlagen oder eingeschossen werden können.

Die Lösung dieser Aufgabe wird dabei nach Anspruch 1 dadurch erreicht, daß die vordere Flanke des Gewindeprofils jedes Gewindeganges im Anschluß an einen geneigten Innenabschnitt einen konvex gewölbten Außenabschnitt aufweist, der sich über die Gewindeprofil-Mittelebene wenigstens geringfügig hinaus erstreckt und dann mit einem in Richtung zum Kopf und gegen die Schaftachse geneigt verlaufenden Endabschnitt an die hintere Flanke herangeführt ist.

Diese erfindungsgemäße Ausbildung des Gewindeprofils erhöht den Gebrauchswert der Holzschrauben beträchtlich. Es wird nämlich nicht nur das Abreißen von Material durch die Gewindegänge beim Eintreiben der Schrauben verhindert, sondern es wird auch eine Verdrängung des dem Schraubenschaft und den Gewindegängen benachbarten Materials unter entsprechender elastischer Verdichtung der betreffenden Materialbereiche bewirkt. Nach dem Eindringen der Schraube sucht das elastisch verdichtete Material in seine Ursprungslage zurückzukehren und dringt daher zwischen die Gewindegänge ein sowie bis an den Schaftumfang heran. Sowohl das Eindrehen als auch das Eintreiben der Schrauben ist daher gleichermaßen gut möglich, ohne daß ihr Ausziehwiderstand vermindert wird.

Nach Anspruch 2 besteht eine erfindungsgemäße Ausgestaltungsmöglichkeit der Holzschrauben darin, daß sich an den gewölbten Außenabschnitt des Gewindeprofils sowohl der gegen dessen Mittelebene geneigte Innenabschnitt der vorderen Flanke als auch der gegen die Schaftachse geneigte Endabschnitt tangential anschließt.

Als besonders vorteilhaft erweist sich jedoch eine Holzschraube, bei der nach dem Erfindungsmerkmal des Anspruchs 3 der gegen die Mittelebene geneigte Innenabschnitt der vorderen Flanke des Gewindeprofils relativ zum gewölbten Außenabschnitt desselben auf einer sekantialen Ebene liegt, während der gegen die Schaftachse geneigte Endabschnitt sich tangential an den gewölbten Außenabschnitt anschließt.

Nach Anspruch 4 ist im Rahmen der Erfindung aber auch eine Ausgestaltung der Holzschraube möglich, bei welcher sich an den konvex gewölbten Außenabschnitt des Gewindeprofils sowohl der gegen die Mittelebene geneigte

Innenabschnitt der vorderen Flanke als auch der gegen die Schaftachse geneigte Endabschnitt jeweils auf einer sekantialen Ebene liegend anschließt.

In weiterer Ausgestaltung der Erfindung hat es sich nach Anspruch 5 aber auch als zweckmäßig erwiesen, wenn der stumpfwinklige Übergang zwischen dem Endabschnitt und der hinteren Flanke des Gewindeprofils kantig - also nicht abgerundet - ausgeführt ist. Ferner ist nach Anspruch 6 vorgesehen, daß der Endabschnitt des Gewindeprofils mit einer Neigungslage zwischen 10° und 15° gegenüber der Schaftachse verläuft. Nach Anspruch 7 ist darüber hinaus noch in Vorschlag gebracht, daß der konvex gewölbte Außenabschnitt des Gewindeprofils durch einen Kreisbogen begrenzt wird.

Besonders bewährt haben sich die vorstehend angegebenen, erfindungsgemäßen Ausgestaltungsmaßnahmen in Anwendung bei Holzschrauben, die nach Anspruch 8 dadurch gekennzeichnet sind, daß das den konvex gewölbt verlaufenden Außenabschnitt aufweisende Gewinde auf dem Gewindeabschnitt mit einem gegenüber dem Querschnitt des Vollschaftes vergrößerten Außendurchmesser ausgewalzt ist, daß der Kerndurchmesser des Gewindeabschnittes geringfügig kleiner als der Querschnitt des Vollschaftes ausgewalzt ist und daß unterhalb des Kopfes am Vollschaft entweder ein zylinderförmiger Bund angestaucht ist, dessen Durchmesser etwa dem Außendurchmesser des Gewindes entspricht, oder aber ein schwach konischer Bund angestaucht ist, der sich in Richtung auf die Schraubenspitze verjüngt und dessen größter Durchmesser etwa dem Außendurchmesser des Gewindes entspricht.

Es wird hierdurch der Vorteil erzielt. daß eine gattungsgemäße Holzschraube ohne Materialverlust mit vermindertem technischen Aufwand, also kostengünstig herstellbar ist. Diese kann dabei auch ohne Vorbohren von Löchern eingetrieben werden und beim Eindrehen in vorgebohrte Löcher ergibt sich ein verminderter Eindrehwiderstand, ohne daß sich eine Verringerung des Auszugswiderstandes einstellt. Ein Aufspleißen des Materials im Bereich des die Schraube aufnehmenden Loches wird nämlich sicher verhindert.

Vorteilhaft ist dabei auch, daß die Holzschraube bei hohem Ausziehwiderstand und vermindertem Eindrehwiderstand eine spielfreie und zentrierte Befestigung von Beschlagteilen zuläßt.

Weitere Merkmale und Vorteile des Gegenstandes der Erfindung werden nachfolgend an in der Zeichnung dargestellten Ausführungsbeispielen erläutert. Hierbei zeigen

Figur 1 in räumlicher Darstellung einen glatten -Drahtstift-Rohling mit angestauchtem Kopf-zur-Herstellung einer Holzschraube,

Figur 2 ebenfalls in räumlicher Darstellung eine aus dem Drahtstift-Rohling nach Fig. 1 fertiggestellte Holzschraube,

Figur 3 die Holzschraube in der Seitenansicht,

Figur 4 in räumlicher Darstellung einen glatten Drahtstift mit angestauchtem Kopf zur Herstellung einer Holzschraube,

Figur 5 ebenfalls in räumlicher Darstellung eine aus dem Drahtstift nach Fig. 4 fertiggestellte Holzschraube,

Figur 6 die Holzschraube nach Fig. 5 in Seitenansicht,

Figur 7 eine weitere Ausführungsform einer Holzschraube in Seitenansicht,

Figur 8 in stark vergrößertem Maßstab den in Fig. 7 mit VIII gekennzeichneten Ausschnittsbereich der Holzschraube,

Figur 9 eine der Fig. 8 entsprechende Darstellung in abgewandelter Ausführung und

Figur 10 wiederum eine der Fig. 8 entsprechende Darstellung einer weiteren, abgewandelten Ausführung.

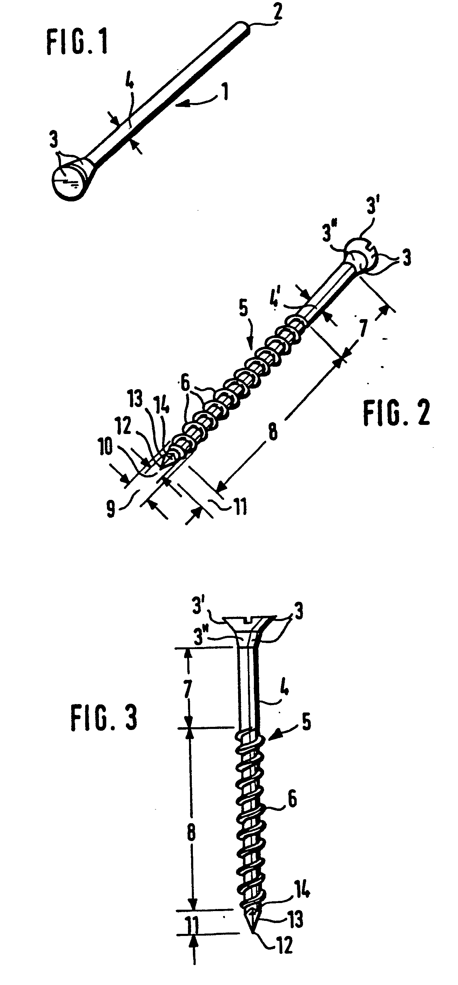

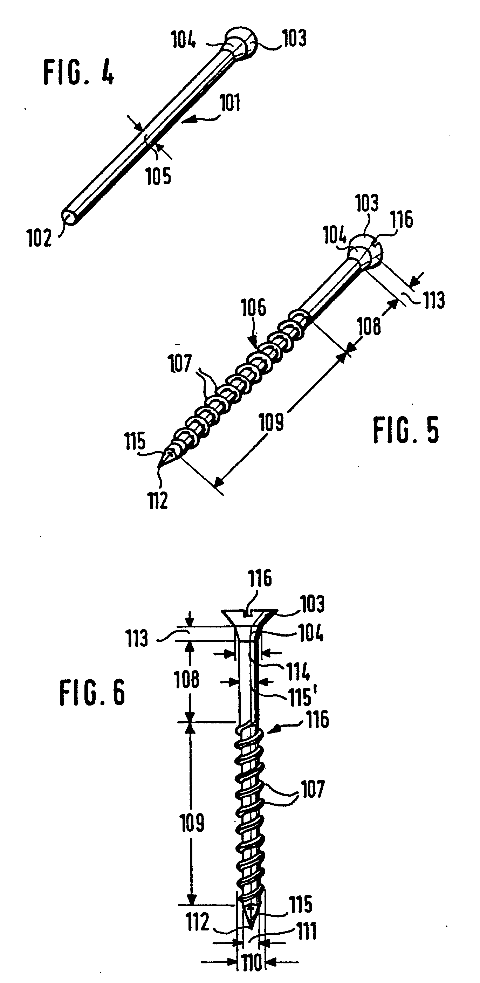

In Fig. 1 ist ein glatter Drahtstift-Rohling 1 gezeigt, dessen vorderes Ende 2 gerade abgeschnitten ist, während sein hinteres Ende einen angestauchten Kopf 3 aufweist, der nur bspw. als Senkkopf dargestellt ist. Der angestauchte Kopf 3 kann also auch jede andere gebräuchliche Form haben, also ein Linsenkopf, ein Halbrundkopf oder auch ein Mehrkantkopf sein. Ist der Kopf 3 als Senkkopf, Linsensenkkopf oder Halbrundkopf ausgebildet, dann kann er mit einem eingearbeiteten Werkzeugeingriff versehen werden, der in den Fig. 2 und 3 als Dametralschlitz angedeutet ist, welcher durch einen nachträglichen Arbeitsgang, bspw. mittels eines Schlitzwerkzeuges, angebracht wird. Wird der Werkzeugeingriff als Kreuzschlitz ausgeführt, dann muß dieser gleichzeitig mit dem Anstauchen des Kopfes 3 ausgebildet werden.

Wenn man vom angestauchten Kopf 3 absieht, hat der Drahtstift-Rohling 1 gemäß Fig. 1 auf der ganzen Länge gleichen Durchmesser 4.

Bei der Herstellung der Schraube 5 nach den Fig. 2 und 3 aus dem Drahtstift-Rohling 1 wird auf dessen Umfang ein Gewinde 6 derart aufgewalzt, daß an der Schraube 5 im Anschluß an einen glatten Vollschaft 7 ein Gewindeabschnitt 8 entsteht, auf dem das Gewinde 6 einen Außendurchmesser 9 hat, der größer ist als der dem Ausgangsdurchmesser 4 entsprechende Durchmesser 4' des glatten Schaftes 7. Die Ausformung des aufgewalzten Gewindes 6 ergibt sich dabei dadurch, daß der Kerndurchmesser 10 über die Länge des Gewindeabschnittes 8 geringfügig kleiner ausgewalzt wird als der dem Ausgangsdurchmesser 4 entsprechende Durchmesser 4' des glatten Schaftes 7, wie das ohne weiteres aus den Fig. 2 und 3 erkennbar ist.

Ein wichtiges Merkmal der Holzschraube 5 nach den Fig. 2 und 3 besteht darin, daß Sich an den Gewindeabschnitt 8 noch ein Spitzenabschnitt 11 anschließt, vor dem das Gewinde 6 endet. Der Spitzenabschnitt 11 ist dabei so verformt, daß sich an den letzten Gang des Gewindes 6 als Spitze 13 eine mindestens dreiseitige vorzugsweise aber vierseitige Pyramide 13 anschließt, die als Nagelspitze wirksam gemacht werden kann und deshalb eine angestauchte, vorzugsweise leicht kugelig gestaltete Kuppe 12 aufweist.

Wichtig ist ferner, daß beim Aufwalzen des Gewindes 6 der Fußbereich des letzten Gewindeganges mindestens bis in eine Kante der pyramidenspitze 13 eindringt und dort eine Kerbe 14 erzeugt, die wiederum eine Ecke ausbildet. Diese Ecke der Pyramidenspitze 13 erzeugt dann beim Eindrehen der Holzschraube 5 in den Holzwerkstoff, vor dem eigentlichen Gewinde 6 herlaufend, eine gewindeähnliche Furche, die das nachfolgende Eindringen des Gewindes 6 erleichtert und damit den Eindrehwiderstand für die Schraube 5 verringert.

Die Pyramidenspitze 13 hat nicht nur den Zweck, ein zentriertes Annageln der Holzschraube 5 vor Beginn des Einschraubvorgangs zu ermöglichen. Vielmehr wirkt sie beim Eindrehen der Holzschraube 5 in nicht oder nicht genügend tief vorgebohrten Holzwerkstoff nach Art einer Drillbohrerklinge, die dem Kerndurchmesser 10 des Gewindeabschnitts 8 Platz schafft, ohne daß dabei ein Aufspleißen des Holzwerkstoffes eintritt. Auch der glatte Schaft 7 der Holzschraube 5 kann in den solchermaßen geschaffenen Raum im Holzwerkstoff eindringen, ohne daß sich dabei der Eindrehwiderstand merklich erhöht.

Erwähnt sei noch, daß beim gezeigten Ausführungsbeispiel der Kopf 3 zwei Abschmitte 3' und 3" hat, die unterschiedliche Konuswinkel aufweisen und dadurch dem Kopf 3 eine gewissermaßen trompetenartige Gestalt geben.

Der Fig. 4 ist - ähnlich wie der Fig. 1 - ein glatter Drahtstift-Rohling 101 zu entnehmen, dessen freies Ende 102 gerade abgeschnitten ist, während sein hinteres Ende einen angestauchten Kopf 103 aufweist, der beispielsweise als Senkkopf dargestellt ist. Der angestauchte Kopf 103 kann aber auch eine andere gebräuchliche Form haben, also bspw. ein Linsensenkkopf, ein Halbrundkopf oder auch ein Mehrkantkopf sein.

Gleichzeitig mit dem Anstauchen des Kopfes 103 an den Drahtstift-Rohling 101 wird unterhalb desselben noch ein Bund 104 angestaucht.

Abgesehen vom Kopf 103 und vom Bund 104 weist der Drahtstift-Rohling 101 auf seiner ganzen Länge gleichen Durchmesser 105 auf. Bei der Fertigung einer Schraube 106 aus dem Drahtstift-Rohling 101 wird auf dessen Umfang ein Gewinde 107 aufgewalzt, und zwar so, daß im Anschluß an einen glatten Schaftteil 108 ein Gewindeabschnitt 109 entsteht, auf welchem das Gewinde 107 einen Nenn- bzw. Außendurchmesser 110 erhält, welcher größer ist als der dem Durchmesser 105 des Draht-stift-Rohlings 101 entsprechende Durchmesser 105' des glatten Schaftes 108. Die Ausformung des Gewindes 107 wird dadurch erreicht, daß der Kerndurchmesser 111 auf der Länge des Gewindeabschnitts 109 geringfügig kleiner ausgewalzt wird als der Ausgangsdurchmesser 105 des Drahtstift-Rohlings 101, wie das ohne weiteres der Fig. 6 entnommen werden kann.

Aus der Zeichnung geht hervor, daß der unterhalb des Kopfes 103 angestauchte Bund 104 vorzugsweise konische Gestalt erhält und sich dabei vom Senkkopf 103 hinweg in Richtung auf die Schraubenspitze 112 hin verjüngt. Der Kegelwinkel des Bundes 104 ist dabei wesentlich kleiner als der Kegelwinkel am Senkkopf 103.

Erwähnt sei noch, daß der angestauchte Bund 104 auch so gestaltet werden kann, daß er zumindest über den Oberteil seiner Länge 113 zylinderförmige Gestalt hat. Die Länge 113 des Bundes 104 wird zweckmäßig so bemessen, daß sie mindestens gleich der Höhe des Senkkopfes 103 ist und vorzugsweise dem Durchmesser 105' des glatten Schaftteils 108 entspricht. Letzteres ist besonders dann wichtig, wenn der Bund 104 zumindest über einen Teil seiner Länge 113 zylindrische Gestalt hat.

Der größte Durchmesser 114 des angestauchten Bundes 104 ist so ausgelegt, daß er mit dem Nenn- bzw. Außendurchmesser 110 des Gewindes 107 am Gewindeabschnitt 109 übereinstimmt.

Der Bund 104 wirkt als Zentrierbund entweder unmittelbar mit dem oberen Ende des die Holzschraube 106 aufnehmenden Loches im Holz- oder Spanplattenbauteil, oder aber mit einem entsprechenden Loch in einem daran zu befestigenden Beschlagteil, z.B. einem Scharnier, zusammen. Da der größere Durchmesser 114 des Bundes 104 mindestens gleich dem Nenn- bzw. Außendurchmesser 110 des Gewindes 107 bemessen ist, kann er in jedem Falle das an sich vorhandene Spiel zwischen der Lochwandung und dem Durchmesser 105' des glatten Schaftes 108 sicher überbrücken.

Die Fertigung der Holzschraube 106 nach den Fig. 5 und 6 aus dem Drahtstift-Rohling 101 nach Fig. 4 ist insofern besonders einfach, als im Anschluß an das Anstauchen des Kopfes 103 und des Bundes 104 nur noch das Gewinde 107 aufgewalzt werden muß. Wenn dabei das Gewinde 107 vor der Spitze 112 endet, wie das in den Fig. 5 und 6 ohne weiteres zu sehen ist, dann erweist es sich als zweckmäßig, das vordere Ende der Schraube zu einer mindestens dreiseitigen, vorzugsweise aber vierseitigen Pyramide 115, ähnlich einer Nagelspitze auszuformen. Außerdem ist in üblicher Weise der Kopf 103 noch mit einem Werkzeugeingriff, bspw. einem Diametralschlitz 116, zu versehen.

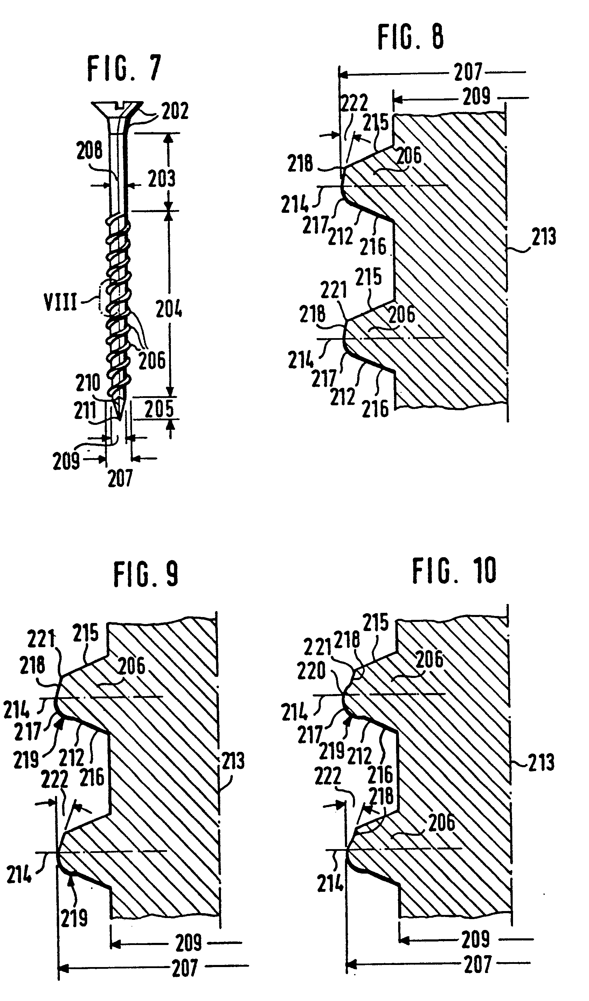

In Fig. 7 der Zeichnung ist eine Schraube 201 dargestellt, die im Anschluß an ihren Kopf 202 einen glatten Vollschaft 203 aufweist, an welchen sich wiederum ein Gewindeabschnitt 204 anschließt. Der Gewindeabschnitt 204 geht dabei am freien Ende in einen spitzen Abschnitt 205 über. Das auf dem Gewindeabschnitt 204 vorgesehene Gewinde 206 hat einen Außendurchmesser 207, der größer ist als der Außendurchmesser 208 des glatten Vollschaftes, wobei der Durchmesser 208 wiederum größer bemessen ist als der Kerndurchmesser 209 auf der Länge des Gewindeabschnittes 204.

Der Spitzenabschnitt 205 der Holzschraube 201 ist so verformt, daß sich an den letzten Gang des Gewindes 206 als Spitze 210 eine mindestens dreiseitige, vorzugsweise aber vierseitige Pyramide anschließt, die als Nagelspitze wirksam gemacht werden kann und deshalb eine angestauchte, vorzugsweise leicht kugelig gestaltete, Kuppe 211 aufweist.

Besonders wichtig bei der Holzschraube 201 nach Fig. 7 ist die Ausgestaltung des Profils der Gewindegänge 206 auf der ganzen Länge des Gewindeabschnitts 204. Deshalb ist der in Fig. 7 mit VIII gekennzeichnete Teilbereich der Schraube 201 nach Fig. 8 in vergrößertem Maßstab dargestellt, wobei dort das Profil von zwei aufeinanderfolgenden Gewindegängen erkennbar ist.

Die vordere Flanke 212, also die jeweils der Spitze 211 der Schraube 201 zugewendete Flanke, ist gegen die auf einer Normalebene zur Schaftachse 213 liegende Mittelebene 214 geneigt angeordnet.

Auch die hintere Flanke 215, also die dem Kopf 202 zugewendete Flanke, weist eine entsprechende, aber entgegengesetzte Neigungslage zur Gewindeprofil-Mittelebene 214 auf.

Im Bereich der vorderen Flanke 212 des Gewindeprofils schließt sich dabei an den geneigten Innenabschnitt 216 ein konvex gewölbt verlaufender Außenabschnitt 217 an. Dieser konvex gewölbte Außenabschnitt 217 erstreckt sich dabei wenigstens geringfügig über die Gewindeprofil-Mittelebene hinaus und wird dann mit einem in Richtung zum Kopf und gegen die Schaftachse 213 hin geneigt verlaufenden.Endabschnitt 218 an die hintere Flanke 215 herangeführt.

Beim Ausführungsbeispiel der Gewindeprofil-Ausbildung nach Fig. 8 schließt sich an den gewölbten Außenabschnitt 217 sowohl der gegen die Gewinde-Mittelebene 214 geneigte Innenabschnitt 216 der vorderen Flanke 212 als auch der gegen die Schaftachse 213 geneigte Endabschnitt 218 tangential an, wie das ohne weiteres erkennbar ist.

In Fig. 9 ist eine gegenüber Fig. 8 abgewandelte Ausführungsform der Gewindeprofil-Ausbildung gezeigt. Der Unterschied gegenüber der Ausführungsform nach Fig. 8 liegt dabei im wesentlichen nur darin, daß der gegen die Gewindeprofil-Mittelebene 214 geneigte Innenabschnitt 216 der vorderen Flanke 212 relativ zum gewölbten Außenabschnitt 217 auf einer Ebene liegt, die einer Sekante zum gewölbten Außenabschnitt 217 entspricht. Hierdurch entsteht dann im Übergangsbereich zwischen dem geneigten Innenabschnitt 216 und dem gewölbten Außenabschnitt 217 ein ausgeprägter Wulst oder Buckel 219, der in Richtung nach der Schraubenspitze 211 hin vorspringt. Der gegen die Schaftachse 213 geneigte Endabschnitt 218 des Gewindeprofils schließt sich hier, ebenso wie beim Ausführungsbeispiel nach Fig. 8, tangential an den gewölbten Außenabschnitt 217 an.

In Fig. 10 ist schließlich eine weitere Gestaltungsform für das Gewindeprofil wiedergegeben. Hier ist die Anordnung dabei so getroffen, daß sich an den konvex gewölbten Außenabschnitt 217 des Gewindeprofils sowohl der gegen die Gewindeprofil-Mittelebene 214 geneigte Innenabschnitt 216 der vorderen Flanke 212 als auch der gegen die Schaftachse 213 geneigte Endabschnitt 218, jeweils auf einer Sekante liegend, anschließt. Hier bildet also nicht nur der Übergangsbereich zwischen dem geneigten Innenabschnitt 216 der vorderen Flanke 212 und dem gewölbten Außenabschnitt 217 einen in Richtung zur Schraubenspitze 211 hinweisenden ausgeprägten Wulst oder Höcker 19. Vielmehr ist ein ähnlich ausgeprägter Wulst oder Höcker 220 auch im Übergangsbereich zwischen dem geneigten Endabschnitt 218 und dem konvex gewölbten Außenabschnitt 217 vorhanden, wobei dieser sich im wesentlichen in Radialrichtung erstreckt.

Erwähnt sei noch, daß bei allen in den Fig. 8 bis 10 gezeigten Ausführungsbeispielen der stumpfwinklige Übergang 221 zwischen dem geneigten Endabschnitt 218 und der hinteren Flanke 215 des Gewindeprofils möglichst kantig ausgeführt werden sollte. Dabei hat es sich als zweckmäßig erwiesen, wenn der Endabschnitt 218 des Gewindeprofils unter einem Winkel 222 gegen die Schaftachse 213 geneigt verläuft, der zwischen 10° und 15° liegt.

Als besonders vorteilhaft erweist es sich bei allen Ausführungsbeispielen für das Gewindeprofil, wenn der konvex gewölbte Außenabschnitt 219 durch einen Kreisbogen bestimmt wird. Der besondere Vorteil einer Holzschraube 201 mit den in der Zeichnung dargestellten und anhand derselben erläuterten sowie auch beanspruchten Merkmalen liegt darin, daß außer der Möglichkeit des üblichen Eindrehens auch noch die Möglichkeit des Eintreibens, nämlich durch Einschlagen oder Einschießen, geboten wird, ohne daß hierdurch eine Beeinträchtigung des Gebrauchswertes eintritt. Gleichgültig, ob die Schraube in ein vorgebohrtes Loch oder aber ohne Vorbohren unmittelbar in das Material eingedreht oder aber, ob sie durch Hammerschläge oder Einschießen eingetrieben wird, ist in jedem Falle die Erzielung eines hohen Ausziehwiderstandes gewährleistet. Zugleich ist es der Erzielung eines geringen Eindreh- bzw. Eintreibwiderstandes dienlich, daß die Holzschraube 201 außer dem eigenartigen Gewindeprofil an ihrem freien Ende noch die als mindestens dreiseitige Pyramide ausgebildete Spitze 210 aufweist. Beim Eindrehvorgang wird diese nämlich bohrerartig, während sie beim Eintreiben die gleiche Funktion wie eine Nagelspitze ausübt.

**Patentansprüche**

1. Holzschraube (201) mit einem angestauchten, einen Werkzeugeingriff aufweisenden Kopf (202), einem an dessen Unterseite anschließenden Vollschaft (203) und einem sich wiederum an diesen anschließenden, in eine Spitze (205, 210) auslaufenden Gewindeabschnitt (204), bei welcher die Gänge des Gewindes (206) jeweils zwei gegeneinander und gegen eine auf einer Normalebene zur Schaftachse (213) liegende Mittelebene (214) geneigte Flanken (212, 215), haben,

dadurch gekennzeichnet, daß die vordere Flanke (212) des Gewindeprofils jedes Gewindeganges (206) im Anschluß an einen geneigten Innenabschnitt (216) einen konvex gewölbt verlaufenden Außenabschnitt (217) aufweist, der sich über die Gewindeprofil-Mittelebene (214) wenigstens geringfügig hinaus erstreckt und dann mit einem in Richtung zum Kopf (202) und gegen die Schaftachse (213) geneigt verlaufenden Endabschnitt (218) an die hintere Flanke (215) herangeführt ist.

2. Holzschraube nach Anspruch 1, dadurch gekennzeichnet, daß sich an den gewölbten Außenabschnitt (217) des Gewindeprofils sowohl der gegen die Gewindeprofil-Mittelebene (214) geneigte Innenabschnitt (216) der vorderen Flanke (212) als auch der gegen die Schaftachse (213) geneigte Endabschnitt (218) tangential anschließt.

3. Holzschraube nach Anspruch 1, dadurch gekennzeichnet, daß der gegen die Gewindeprofil-Mittelebene (214) geneigte Innenabschnitt (216) der vorderen Flanke (212) des Gewindeprofils relativ zum konvex gewölbten Außenabschnitt (217) desselben auf einer sekantialen Ebene liegt, während der gegen die Schaftachse (213) geneigte Endabschnitt (218) sich tangential an den gewölbten Außenabschnitt (217) anschließt.

4. Holzschraube nach Anspruch 1, dadurch gekennzeichnet, daß sich an den konvex gewölbten Außenabschnitt (217) des Gewindeprofils sowohl der gegen die Gewindeprofil-Mittelebene (214) geneigte Innenabschnitt (216) der vorderen Flanke (212) als auch der gegen die Schaftachse (213) geneigte Endabschnitt (218) jeweils auf einer sekantialen Ebene liegend anschließt.

5. Holzschraube nach einem der Ansprüche 1 bis 4, dadurch gekennzeichnet, daß der stumpfwinklige Übergang (221) zwischen dem geneigten Endabschnitt (218) und der hinteren Flanke (215) des Gewindeprofils kantig ausgeführt ist.

6. Holzschraube nach einem der Ansprüche 1 bis 5, dadurch gekennzeichnet, daß der geneigte Endabschnitt (218) des Gewindeprofils mit einer Neigungslage (222) zwischen 10° und 15° gegenüber der Schaftachse (213) verläuft.

7. Holzschraube nach einem der Ansprüche 1 bis 6, dadurch gekennzeichnet, daß der konvex gewölbte Außenabschnitt (217) des Gewindeprofils durch einen Kreisbogen begrenzt ist.

8. Holzschraube nach einem der Ansprüche 1 bis 7, dadurch gekennzeichnet, daß das den konvex gewölbten Außenabschnitt (217) aufweisende Gewinde (6; 106; 206) auf dem Gewindeabschnitt (8; 109; 204) mit einem gegenüber dem Querschnitt (4; 105; 208) des Vollschaftes (7; 108; 203) vergrößerten Außendurchmesser (9; 110; 207) ausgewalzt ist, daß der Kerndurchmesser (10; 111; 209) des Gewindeabschnittes (8; 109; 204) geringfügig kleiner als der Querschnitt (4; 105; 208) des Vollschaftes (7; 108; 208) ausgewalzt ist und daß unterhalb des Kopfes (3; 103; 202) am Vollschaft (7; 108; 203) entweder ein zylinderförmiger Bund angestaucht ist, dessen Durchmesser etwa dem Außendurchmesser (9; 110; 207) des Gewindes (6; 107; 206) entspricht, oder aber ein schwach konischer Bund angestaucht ist, der sich in Richtung auf die Schraubenspitze (13; 115; 210) verjüngt und dessen größter Durchmesser etwa dem Außendurchmesser (9; 110; 207) des Gewindes (6; 107; 206) entspricht.

## Claims

1. A wood screw (201) having an upset head (202) exhibiting a means of engaging a tool, having next the head on the underside a solid shank (203) and next that again a threaded portion (204) which runs out into a point (205, 210), where the turns of the thread (206) have respectively two flanks (212, 215) which are inclined with respect to one another and with respect to a central plane (214) lying on a plane normal to the axis (213) of the shank,
characterized in that
the front flank (212) of the profile of the thread of each turn (206) of the thread exhibits, beyond an inclined inner portion (216), an outer portion (217) which runs convexly rounded and which extends at least slightly beyond the central plane (214) of the thread profile and then is led upwards into the rear flank (215) by an end portion (218) which runs in the direction towards the head (202) and inclined with respect to the axis (213) of the shank.

2. A wood screw as in Claim 1, characterized in that
both the inner portion (216) of the front flank (212), which is inclined with respect to the central plane (214) of the thread profile, and the end portion (218) which is inclined with respect to the axis (213) of the shank, are connected tangentially to the rounded outer portion (217) of the thread profile.

3. A wood screw as in Claim 1, characterized in that
the inner portion (216) of the front flank (212) of the thread profile, which is inclined with respect to the central plane (214) of the thread profile, lies on a secantial plane relatively to the convexly rounded outer portion (217) of the latter, whilst the end portion (218) which is inclined with respect to the axis (213) of the shank is connected tangentially to the rounded outer portion (217).

4. A wood screw as in Claim 1,

characterized in that
both the inner portion (216) of the front flank (212), which is inclined with respect to the central plane (214) of the thread profile, and the end portion (218) which is inclined with respect to the axis (213) of the shank, are connected respectively to the convexly rounded outer portion (217) of the thread profile to lie on a secantial plane.

5. A wood screw as in one of the Claims 1 to 4, characterized in that
the obtuse-angled transition (221) between the inclined end portion (218) and the rear flank (215) of the thread profile is effected at an edge.

6. A wood screw as in one of the Claims 1 to 5, characterized in that
the inclined end portion (218) of the thread profile runs at an obliquity (222) between 10° and 15° with respect to the axis (213) of the shank.

7. A wood screw as in one of the Claims 1 to 6, characterized in that
the convexly rounded outer portion (217) of the thread profile is bounded by an arc of a circle.

8. A wood screw as in one of the Claims 1 to 7, characterized in that
the thread (6; 106; 206) exhibiting the convexly rounded outer portion (217) is rolled out on the portion of thread (8; 109; 204) with an outer diameter (9; 110; 207) which is increased with respect to the cross-section (4; 105; 208) of the solid shank (7; 108; 203), that the core diameter (10; 111; 209) of the portion of thread (8; 109; 204) is rolled out slightly smaller than the cross-section (4; 105; 208) of the solid shank (7; 108; 208 - 2203?) and that underneath the head (3; 103; 202) on the solid shank (7; 108; 203) either a cylindrical collar is upset, the diameter of which corresponds about with the outer diameter (9; 110; 207) of the thread (6; 107; 206) or else a slightly conical collar is upset, which in the direction towards the point (13; 115; 210) of the screw tapers in and the greatest diameter of which corresponds about with the outer diameter (9; 110; 207) of the thread (6; 107; 206).

**Revendications**

1. Vis à bois (201) comportant une tête refoulée (202) munie d'un moyen de prise pour un outil, une tige pleine (203) s'y rattachant à la face inférieure et un tronçon fileté (204) se raccordant à celle-ci et se terminant par une pointe (205, 210), dans lequel les spires de vis (206) comportent deux flancs inclinés (212, 215) l'un par rapport à l'autre et par rapport à un plan médian (214) situé dans un plan normal à l'axe (213) de la tige, caractérisé en ce que le flanc antérieur (212) du profil de chaque spire (206) du filet présente, à la suite d'une partie intérieure inclinée (216), une partie extérieure bombée de manière convexe (217), qui s'étend au moins légèrement au-delà du plan médian (214) du profil du filet et qui se raccorde ensuite au flanc postérieur (215) moyennant une partie terminale (218) inclinée par rapport à l'axe (213) de la tige et s'étendant vers la tête (202).

2. Vis à bois selon la revendication 1, caractérisée en ce que la partie intérieure (216) du flanc antérieur (212), inclinée par rapport au plan médian (214) du profil du filet et la partie terminale (218) inclinée par rapport à l'axe de la tige (213) s'accordent tangentiellement à la partie extérieure bombée (217) du profil du filet.

3. Vis à bois selon la revendication 1, caractérisée en ce que la partie intérieure (216) du flanc antérieur (212) du profil du filet, qui est inclinée par rapport au plan médian (214) est située dans un plan sécant de la partie extérieure bombée (217) dudit profil, tandis que la partie terminale (218) inclinée par rapport à l'axe de la tige (213) se raccorde tangentiellement à la partie extérieure bombée (217).

4. Vis à bois selon la revendication 1 caractérisée en ce que la partie intérieure (216) du flanc antérieur (212), inclinée par rapport au plan médian (214) du profil du filet et la partie terminale (218) inclinée par rapport à l'axe de la tige (213) se raccordent à la partie extérieure (217) bombée de manière convexe du profil du filet, en étant situées chacune dans un plan sécant.

5. Vis à bois selon l'une quelconque des revendications 1 à 4, caractérisée en ce que la transition en angle obtus (221) entre la partie terminale inclinée (218) et le flanc postérieur (215) du profil du filet est ouvrée avec une arête.

6. Vis à bois selon l'une quelconque des revendications 1 à 5, caractérisée en ce que la partie terminale inclinée (218) du profil du filet s'étend de manière inclinée par rapport à l'axe de la tige (213), selon une inclinaison (222) comprise entre 10° et 15°.

7. Vis à bois selon l'une quelconque des revendications 1 à 6, caractérisée en ce que la partie extérieure bombée de manière convexe (217) du profil du filet est définie par un arc de cercle.

8. Vis à bois selon l'une quelconque des revendications 1 à 7, caractérisée en ce que le filet (16; 106; 206) qui présente la partie extérieure bombée de manière convexe est obtenu par cylindrage du tronçon fileté (8; 109; 204) à un diamètre extérieur (9; 110; 207), supérieur à la section (14; 105; 208) de la tige pleine (7; 108; 203), en ce que le diamètre de noyau (10; 111; 209) du tronçon fileté (7; 108; 208) est légèrement inférieur à la section (4; 105; 205) de la tige pleine (7; 108; 208) et en ce qu'une embase cylindrique est refoulée sur la tige pleine (7; 106; 203), en dessous de la tête (3; 103; 202), embase dont le diamètre correspond approximativement au diamètre extérieur (9; 110; 207) du filet (6; 107; 206), ou bien une embase légèrement conique qui se rétrécit vers la pointe de la vis (13; 115; 210) et dont le plus grand diamètre correspond approximativement au diamètre extérieur (9; 110; 207) du filet (6; 107; 206).

FIG.1

FIG. 2

FIG. 3

FIG. 4

FIG. 5

FIG. 6

FIG. 7

FIG. 8

FIG. 9

FIG. 10